# FASCICULE DE BREVET EUROPEEN

(11) **EP 3 073 153 B1**
(45) Date de publication et mention de la délivrance du brevet: **01.01.2020**
(21) Numéro de dépôt: 16154859.9
(22) Date de dépôt: 09.02.2016
(51) Int. Cl.: F16H 25/22, F16D 28/00, F16H 25/20

(54) **ACTIONNEUR POUR SYSTEME DE TRANSMISSION**
STELLGLIED FÜR ÜBERTRAGUNGSSYSTEM
ACTUATOR FOR TRANSMISSION SYSTEM

(30) Priorité: 13.02.2015 FR 1551212
(43) Date de publication de la demande: 28.09.2016
(73) Titulaire: Valeo Embrayages, 80009 Amiens Cedex 2 (FR)
(72) Inventeur: MAUREL, Hervé, 80000 AMIENS (FR)
(74) Mandataire: Cardon, Nicolas

(56) Documents cités:
- WO-A1-99/64756
- DE-A1- 10 222 719
- US-A- 5 931 268
- US-A1- 2008 078 644

## Description

La présente invention concerne un actionneur pour système de transmission.

L'invention s'applique notamment, mais non exclusivement, à un système de transmission de véhicule.

Un tel système de transmission peut permettre de déplacer un élément du système de transmission de manière à modifier l'état dudit système de transmission.

On connaît de la demande US2008/0078644 un actionneur électrique d'embrayage de type vis/écrou, un organe de guidage filetée solidaire d'un carter coopérant avec une autre pièce filetée portée par un rotor mobile. Cette coopération permet la transformation du mouvement de rotation du rotor en un déplacement en translation de celui-ci qui permet la modification de l'état de l'embrayage. L'organe de guidage est de révolution d'axe du rotor et présente une surface extérieure entièrement filetée qui coopère avec le rotor. Une telle solution présente plusieurs inconvénients. Le type vis/écrou ayant un rendement faible, un moteur de puissance importante est nécessaire à l'actionneur afin d'assurer un déplacement satisfaisant de la butée. En outre, du fait de sa faible valeur, ce rendement est sensible à la température, à l'humidité, à la dégradation des surfaces de contact, et à la dégradation de la lubrification dans l'actionneur au fil du temps. Enfin, le type vis/écrou est irréversible, ce qui peut poser des problèmes en termes de sécurité.

L'organe de guidage présente plusieurs contraintes de fabrication. Le rotor et l'organe de guidage étant coaxiaux, la forme du rotor impose celle de l'organe de guidage afin que les deux pièces coopèrent lors de toute phase de fonctionnement de l'actionneur. L'organe de guidage doit être aussi suffisamment compact afin d'être logé dans l'espace intérieur restreint formé par le rotor. Ceci implique des contraintes de fabrication fortes et de faibles tolérances lors du montage de l'actionneur.

L'invention vise à fournir un actionneur pour système de transmission qui remédie aux inconvénients précités.

Elle y parvient, selon l'un de ses aspects, à l'aide d'un actionneur pour composant de véhicule comprenant :
- un moteur électrique, comprenant un rotor et un stator, le rotor étant mobile par rapport au stator en rotation autour d'un axe de déplacement et en translation le long de cet axe,
- au moins un organe de guidage pour le déplacement du rotor par rapport au stator, l'organe de guidage présentant une surface en regard d'une surface du rotor, lesdites surfaces étant configurée pour coopérer lors de tout ou partie de ce déplacement, l'organe de guidage et le rotor n'étant pas coaxiaux et
- un organe d'actionnement du composant de véhicule, déplaçable par le rotor.

Selon l'invention, l'organe de guidage et le rotor n'étant pas coaxiaux, la forme de l'organe de guidage n'est pas contrainte par celle du rotor et notamment par la surface du rotor en regard de l'organe de guidage. Ainsi la surface de l'organe de guidage coopérant avec le rotor est modulable par rapport à l'art antérieur, les contraintes de fabrication de cette pièce sont donc nettement réduites. Le positionnement de l'organe de guidage est aussi plus libre et l'encombrement autour du rotor est réduit dans certains secteurs. Cela permet d'optimiser la disposition des différents éléments de l'actionneur afin de simplifier la fabrication et le montage.

La coopération entre les surfaces en regard du rotor et de l'organe de guidage permet de transformer le mouvement de rotation du rotor en mouvement de translation de celui-ci le long de l'axe de déplacement.

Au sens de la présente demande, l'organe de guidage et le rotor n'étant pas coaxiaux signifie que l'axe du rotor et l'axe de l'organe de guidage sont parallèles mais distincts.

La coopération entre les surfaces en regard peut être directe, aucune pièce intermédiaire n'étant interposée entre l'organe de guidage et le rotor.

Les termes radial, axial, transversal et circonférentiel sont à considérer par rapport à l'axe de déplacement du rotor.

L'organe d'actionnement peut être de révolution et s'étendre autour d'un axe, notamment autour de l'axe de déplacement du rotor par rapport au stator.

L'axe de déplacement peut se trouver dans une zone vide de l'actionneur. La zone vide peut s'étendre dans un espace radialement intérieur du moteur électrique. La zone vide peut être traversante, débouchant alors axialement de part et d'autre de l'actionneur. L'actionneur pourra alors être qualifié de « creux ».

La zone vide peut permettre de recevoir un ou plusieurs arbres de transmission du composant lorsque l'actionneur et ce composant sont assemblés. La zone vide peut également recevoir un ou plusieurs arbres de transmission d'autres composants de véhicule. On peut ainsi réduire l'encombrement radial de l'ensemble comprenant l'actionneur et le composant.

L'organe de guidage et/ou le rotor peuvent être de révolution.

Les surfaces en regard de l'organe de guidage et du rotor peuvent être tout ou partie de surfaces cylindriques des dites pièces.

La surface de l'organe de guidage en regard du rotor peut comporter plusieurs surfaces cylindriques de rayons différents et axialement décalées les unes par rapport aux autres. Cette surface peut être uniquement composée par les surfaces cylindriques évoquées ci-dessus.

La surface du rotor en regard de l'organe de guidage peut être cylindrique.

La surface du rotor en regard de l'organe de guidage peut être directement portée par le rotor, étant par exemple ménagée par le paquet de tôles du rotor et/ou par les aimants de ce dernier lorsque le rotor est à aimants permanents. En variante, cette surface peut être portée par un support rapporté sur le rotor et solidaire de ce dernier. Le support peut ou non être monobloc.

L'organe de guidage peut être mobile en rotation autour d'un axe de l'organe de guidage, parallèle à l'axe de déplacement du rotor, notamment sensiblement parallèle à l'axe de déplacement du rotor. En variante, l'organe de guidage peut être mobile en rotation autour d'un axe perpendiculaire à l'axe de déplacement du rotor.

L'organe de guidage peut, par exemple, être mobile en rotation par rapport à un carter de l'actionneur. Ce carter peut également porter rigidement le stator de la machine électrique, le rotor étant donc mobile par rapport au carter, si bien que l'organe de guidage et le rotor peuvent être libres en rotation l'un par rapport à l'autre.

L'organe de guidage peut être immobile en translation par rapport au rotor.

L'ensemble des composants de l'actionneur peut être disposé dans le carter. Le moteur électrique de l'actionneur peut être refroidi par conduction avec le carter. Le cas échéant, le carter intègre un circuit de refroidissement dans lequel circule un fluide de refroidissement, tel que de l'eau liquide, qui peut refroidir le carter et les composants de l'actionneur.

L'actionneur peut comprendre au moins un capteur de position détectant la rotation du rotor et/ou la translation, de l'organe d'actionnement. Le capteur de position peut être un capteur sans contact dont une cible est portée par le rotor, notamment par la surface en regard de l'organe de guidage.

L'organe de guidage peut comprendre un palier. Ce palier peut coopérer avec le carter notamment avec une surface orientée axialement dudit carter. Ce palier permet à l'organe de guidage d'être libre en rotation, notamment par rapport au carter, notamment par rapport au rotor.

Le palier peut, par exemple, être à billes ou à rouleaux.

Le palier peut être disposé à une extrémité axiale de l'organe de guidage et peut permettre une rotation de l'organe de guidage autour d'un axe parallèle à l'axe de déplacement du rotor, l'autre extrémité étant libre.

Les surfaces en regard de l'organe de guidage et du rotor peuvent respectivement porter des stries parallèles et un filetage, le filetage coopérant alors avec les stries. En variante, les surfaces en regard de l'organe de guidage et du rotor peuvent porter des filetages, les filetages coopérant alors entre eux. En variante enfin, les surfaces en regard de l'organe de guidage et du rotor peuvent respectivement porter un filetage et des stries parallèles, le filetage coopérant alors avec les stries.

L'emploi d'un organe de guidage, dont la surface en regard du rotor présente des stries, peut permettre de simplifier l'assemblage des différents éléments de l'actionneur, en effet, une telle configuration ne nécessite pas de synchronisation de l'organe de guidage et du rotor.

Un actionneur, dont l'organe de guidage est libre en rotation autour de l'axe parallèle à l'axe de déplacement et dont les surfaces de l'organe de guidage et du rotor portent respectivement des stries parallèles et un filetage, présente un rendement élevé, notamment plus élevé que ceux d'actionneurs comportant des systèmes de type vis/écrou. Un tel rendement est obtenu par roulement de la surface du rotor portant le filetage sur l'organe de guidage dont la surface extérieure porte des stries. Le roulement est envisageable car les organes de roulement sont libres en rotation.

Un actionneur tel que décrit directement au dessus présente avantageusement un rapport de réduction important comparé aux rapports d'actionneurs disposant de vis à billes. Ce rapport de réduction peut être compris entre 10 et 0,5 mm/tour notamment égal à 1mm/tour.

Les stries peuvent être espacées d'un pas constant notamment égal à 1 mm.

Les stries peuvent être parallèles.

Le filetage peut comprendre des filets de pas apparent égal au pas des stries.

Les stries et/ou le filetage peuvent présenter des profils en forme de V ou de forme convexe.

Les surfaces de l'organe de guidage et du rotor en regard peuvent définir une zone de contact l'une avec l'autre de manière à guider radialement tout ou partie du déplacement du rotor par rapport au stator. La zone de contact peut être distincte des stries et/ou du filetage portés par les surfaces en regard de l'organe de guidage et du rotor. La zone de contact peut être définie par des surfaces lisses de l'organe de guidage et/ou du rotor. La zone de contact peut s'étendre tout autour de l'axe de l'organe de guidage. La zone de contact peut être définie par des surfaces de révolution de l'organe de guidage et du rotor, notamment des surfaces cylindriques.

La zone de contact de la surface de l'organe de guidage en regard du rotor peut être éloignée, notamment axialement, des stries et/ou du filetage portés par ladite surface. Autrement dit, il existe deux zones de coopération distinctes entre l'organe de guidage et le rotor.

Un tel organe de guidage permet à la fois de transformer le mouvement de rotation du rotor en translation du rotor et de guider le déplacement axial dudit rotor.

Aussi, la zone de contact peut permettre de reprendre une partie des efforts radiaux du rotor sur l'organe de guidage afin de solliciter les stries et/ou le filetage de chaque pièce, dans leur zone de bon fonctionnement.

Le palier, les stries et la zone de contact de l'organe de guidage peuvent se succéder axialement lorsque l'on se déplace le long de l'axe de déplacement. En variante, la zone de contact peut être interposée axialement entre le palier et les stries.

L'organe de guidage peut présenter une pièce déformable, notamment élastiquement déformable. Cette pièce déformable donne une liberté de positionnement à l'organe de guidage ce qui permet de maintenir la coopération entre les surfaces en regard du rotor et de l'organe de guidage lors de toute phase de fonctionnement de l'actionneur, notamment lors d'éventuelles vibrations du rotor. Cette pièce permet d'augmenter les tolérances lors du montage de l'organe de guidage.

Le moteur électrique est par exemple un moteur synchrone à rotor à aimants permanents ou à rotor bobiné. En variante, il peut s'agir d'un moteur asynchrone ou d'un moteur à courant continu. Le moteur électrique peut présenter une puissance nominale comprise entre 100 W et 500 W.

Selon un premier mode de réalisation de l'actionneur, le moteur électrique est à rotor externe, et l'organe de guidage est disposé radialement extérieurement par rapport au rotor. Dans un tel cas, la surface du rotor en regard de l'organe de guidage est portée par une surface radialement extérieure du rotor.

Selon un autre mode de réalisation, le moteur électrique est à rotor interne, et l'organe de guidage est disposé radialement intérieurement par rapport au rotor. Dans un tel cas, la surface du rotor en regard de l'organe de guidage est portée par une surface radialement intérieure du rotor.

Indépendamment du mode de réalisation du moteur électrique de l'actionneur, l'organe d'actionnement peut former une butée d'embrayage. Le composant du véhicule est par exemple un embrayage ou une pièce liée à un embrayage. La butée d'embrayage permet alors de modifier l'état du composant de véhicule.

La butée peut s'étendre globalement autour d'un axe, cet axe peut correspondre à l'axe de déplacement du rotor.

La butée d'embrayage peut comporter deux pièces libres en rotation et/ou en translation l'une par rapport à l'autre, une pièce de support coopérant avec le rotor et une pièce d'extrémité. La pièce d'extrémité peut comporter une surface d'appui configurée pour appuyer contre le composant du véhicule.

Autrement dit, la butée d'embrayage peut être liée en translation et/ou en rotation au rotor et peut appuyer sur le composant du véhicule afin d'en modifier son état.

La pièce de support peut être de révolution d'axe de déplacement du rotor par rapport au stator.

La butée peut également comprendre un palier. Ce palier peut coopérer d'une part avec la pièce d'extrémité, et d'autre part avec la pièce de support. Le palier permet la rotation, autour de l'axe de déplacement, de la pièce d'extrémité par rapport à la pièce de support. Le palier permet également la reprise des efforts exercés selon ledit axe par le composant sur la butée.

Le palier peut, par exemple, être à billes ou à rouleaux.

La butée peut également comprendre un organe de poussée. L'organe de poussée permet un déplacement axial de la pièce d'extrémité par rapport à la pièce de support.

L'organe de poussée peut aussi réaliser une fonction de pré-charge de la butée. L'organe de poussée peut comporter un organe de rappel élastique, notamment une rondelle élastique. La pré-charge ainsi réalisée permet par exemple de maintenir un effort axial minimum sur le palier de la butée d'embrayage et sur les organes de l'actionneur permettant le déplacement de la butée à partir de la rotation du moteur électrique, lorsque le système de transmission est actionné en deça de sa position de repos.

L'organe de poussée peut être solidaire en rotation de la pièce de support.

L'organe de poussée peut être interposé entre la pièce d'extrémité et la pièce de support, notamment interposé axialement. Plus précisément, l'organe de poussée peut être interposé entre la pièce de support et le palier.

La pièce de support peut supporter et maintenir radialement le palier, la pièce d'extrémité et l'organe de poussée par exemple en entourant radialement intérieurement et extérieurement les éléments précités.

En combinaison ou indépendamment de ce qui précède, l'actionneur peut comprendre une pluralité d'organes de guidage, tels que précédemment décrit, pour le déplacement du rotor par rapport au stator. Les organes de guidage peuvent être disposés autour de l'axe de déplacement, et chaque organe de guidage peut être mobile en rotation autour d'un axe propre à chaque organe de guidage et parallèle à l'axe de déplacement du rotor par rapport au stator.

Les organes de guidage peuvent reprendre, de manière équitable, une partie des efforts radiaux que le rotor exerce sur les organes de guidage, notamment par l'intermédiaire des zones de contact.

L'actionneur peut comprendre entre deux et cinq organes de guidages avantageusement trois organes de guidage.

Les organes de guidage peuvent être identiques.

Les organes de guidage peuvent être équi-angulairement répartis autour de l'axe de déplacement du rotor.

Les organes de guidage peuvent supporter radialement le rotor.

Les surfaces des organes de guidage en regard du rotor peuvent porter les mêmes stries, ces stries coopérant avec le filetage de la surface du rotor en regard des organes de guidage.

Le filetage de la surface du rotor en regard des organes de guidage peut être continu. En variante, il peut être discontinu.

Le filetage de la surface du rotor peut présenter un nombre de filets multiple du nombre d'organes de guidage, notamment égal au nombre d'organes de guidage, et les stries des organes de guidage peuvent occuper une position axiale commune le long de l'axe de déplacement du rotor. Le rotor coopère alors simultanément avec l'ensemble des organes de guidage lors de toute phase de fonctionnement de l'actionneur.

Autrement dit, tout plan perpendiculaire à l'axe de déplacement du rotor coupant une strie d'un organe de guidage coupe une strie de chaque organe de guidage.

Aussi, il peut ne pas exister de plan perpendiculaire à l'axe de déplacement coupant les stries d'un organe de guidage sans couper les stries d'un autre organe de guidage.

En variante, le filetage de la surface du rotor peut présenter un unique filet. Les stries des organes de guidage occupent alors des positions axiales le long de l'axe de déplacement du rotor différentes d'un organe de guidage à l'autre. Dans un tel cas, il existe un plan perpendiculaire à l'axe de déplacement coupant une strie d'un organe de guidage sans couper une strie d'au moins un autre organe de guidage.

Les stries des organes de guidages peuvent alors former une partition, au sens mathématique du terme, de l'espace axial parcouru par le filetage de la surface du rotor lors du déplacement axial dudit rotor.

Un actionneur dont le filetage de la surface du rotor présente un unique filet peut comprendre N organes de guidage dont les stries de chaque organe de guidage présentent un pas P. Dans une telle configuration, les organes de guidage successifs, lorsque l'on se déplace autour de l'axe de déplacement du rotor, sont décalés axialement de P/N les uns par rapport aux autres. Le filetage du rotor coopère successivement avec les différentes stries lors de tout ou partie du déplacement du rotor par rapport au stator.

L'invention a encore pour objet, selon un autre de ses aspects, un ensemble, comprenant :
- un composant de véhicule, par exemple un embrayage, un frein ou une boîte de vitesses, et
- un actionneur tel que défini ci-dessus, l'actionneur permettant lorsqu'il est déplacé par le rotor, de modifier l'état du composant.

L'actionneur peut, pour modifier l'état du composant, interagir avec un élément de ce composant, par exemple un cylindre émetteur ou un diaphragme dans le cas où le composant est un embrayage. L'actionneur peut s'étendre radialement autour de tout ou partie de cet élément avec lequel il interagit.

L'invention pourra être mieux comprise à la lecture de la description qui va suivre d'un exemple non limitatif de mise en œuvre de celle-ci et à l'examen du dessin annexé sur lequel :
- la figure 1 représente en élévation et en coupe partielle un actionneur selon un premier exemple de mise en œuvre de l'invention,
- les figures 2 et 3 représentent l'actionneur de la figure 1, respectivement dans une configuration dans laquelle il appuie sur le composant de véhicule, et dans une configuration dans laquelle il n'appuie pas sur le composant,
- la figure 4 représente de façon schématique un actionneur selon un deuxième exemple de mise en œuvre de l'invention,

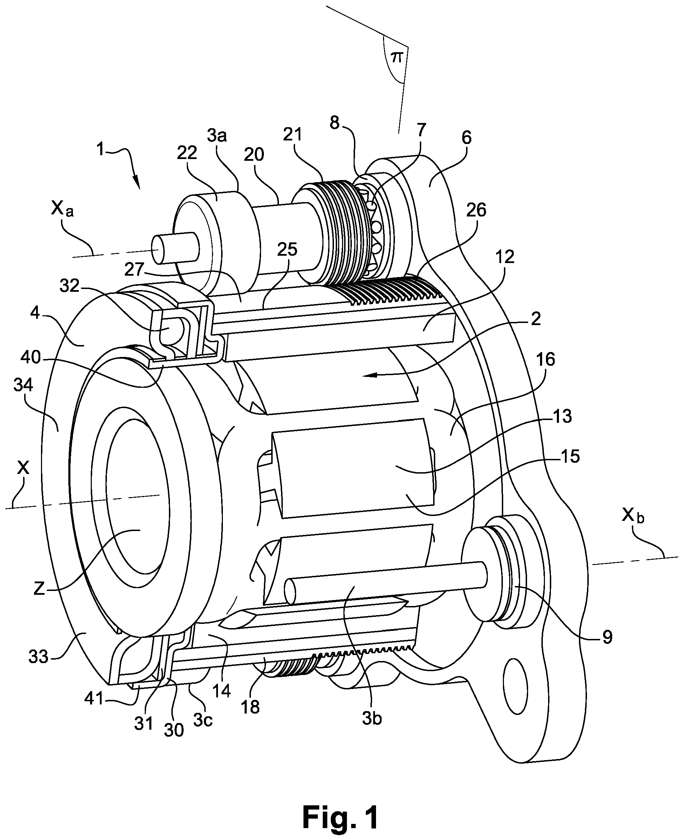

On a représenté sur la figure 1 un exemple d'actionneur 1 d'un composant de véhicule, par exemple un embrayage ou un frein, selon un premier exemple de mise en œuvre de l'invention. Cet actionneur 1 comprend :
- un moteur électrique 2, comprenant un rotor 12 et un stator 13, le rotor étant mobile par rapport au stator 13 en rotation autour d'un axe de déplacement X et en translation le long de cet axe de déplacement X,
- une pluralité d'organe de guidage 3, pour le déplacement du rotor 12 par rapport au stator 13 et
- un organe d'actionnement 4 du composant de véhicule, déplaçable par le rotor 12.

Selon un premier mode de réalisation le moteur électrique 2 est à rotor externe, c'est-à-dire que le rotor 12 est radialement plus éloigné de l'axe de déplacement X que le stator 13. Le rotor 12 comporte des aimants 14 disposés circonférentiellement autour du stator 13. Le stator 13 comporte des tôles 15 sur lesquelles est bobiné un enroulement électrique de stator 16.

L'organe d'actionnement 4 et le moteur électrique 2 sont de révolution d'axe de déplacement X. L'actionneur 1, dans l'exemple représenté à la figure 1, est donc concentrique.

L'actionneur 1 présente une zone vide Z, centrale, et cette zone contient l'axe de déplacement X. La zone vide Z s'étend dans un espace radialement intérieur du moteur électrique 2. La zone vide Z s'étend dans cet exemple tout le long de l'axe de déplacement X, c'est-à-dire qu'elle est traversante, débouchant alors axialement de part et d'autre de l'actionneur 1, l'actionneur 1 est donc creux. La zone vide Z peut permettre de recevoir un ou plusieurs arbres de transmission non représentés ici, ces arbres de transmission appartenant par exemple au composant de véhicule.

Toujours dans l'exemple représenté à la figure 1, les trois organes de guidage 3, indexées 3a, 3b et 3c, sont identiques, l'organe de guidage 3b n'étant que partiellement représenté.

Les organes de guidage 3a, 3b et 3c sont respectivement d'axes de révolution Xa, Xb et Xc et ces axes des organes de guidage sont parallèles à l'axe de déplacement X. Les axes de révolution Xa, Xb et Xc sont parallèles à l'axe de déplacement X mais distinct de celui-ci. Ainsi, les organes de guidage 3a, 3b et 3c et le rotor 12 ne sont pas coaxiaux.

Les organes de guidage 3a, 3b et 3c sont équi-angulairement répartis autour de l'axe de déplacement X.

Dans l'exemple considéré, les organes de guidages 3a, 3b et 3c sont mobiles en rotation par rapport à un carter 6 de l'actionneur 1. Un palier à rouleaux 7 est disposé à une extrémité axiale de chaque organe de guidage 3a, 3b, 3c. Ce palier 7 coopère avec une surface 8 orientée axialement du carter 6.

Chaque organe de guidage 3a, 3b, 3c présente, dans l'exemple considéré, une surface 20, de révolution, en regard d'une surface 25, cylindrique et continue, du rotor 12. Dans l'exemple considéré, la surface 25 n'appartient pas au rotor 12 mais elle est portée par un support 18 rapporté sur le rotor 12 et solidaire de ce dernier. Dans l'exemple considéré, le support 18 est monobloc. Le support 18 peut par exemple être monté sur le rotor 12 par frettage.

Dans l'exemple représenté à la figure 1, les surfaces, en regard, 20 et 25, du rotor 12 et des organes 3a ,3b, 3c portent respectivement des stries 21, parallèles, espacées d'un pas p et un filetage 26 de pas apparent p. Le filetage 26 coopère avec les stries 21 pour le déplacement en translation du rotor 12 par rapport au stator 13, le filetage 26 roulant sur les stries 21.

Toujours dans l'exemple représenté à la figure 1, les surfaces, en regard, 20 et 25, du rotor 12 et des organes 3a ,3b, 3c définissent une zone de contact l'une de l'autre de manière à guider radialement le déplacement du rotor 12, par rapport au stator 13. Cette zone de contact est définie par des surfaces lisses 22 et 27 respectivement des organes de guidages 3a ,3b, 3c et du rotor 12.

Dans l'exemple considéré, le palier 7, les stries 21 et la zone de contact 22 de chaque organe de guidage 3a, 3b, 3c se succèdent axialement le long des axes Xa, Xb et Xc. Les stries 21 et la zone de contact, définie par la surface lisse 22, sont éloignées axialement. Il existe ainsi deux zones de coopération distinctes entre chaque organe de guidage 3a, 3b, 3c et le rotor 12.

Le filetage 26 comprend, dans l'exemple considéré, un nombre de filets multiple du nombre d'organe de guidage 3a, 3b et 3c. Dans l'exemple représenté à la figure 1, le nombre de filets du filetage 26 est un multiple de trois. Les stries 21 portées par les organes de guidage 3a, 3b et 3c occupent alors une position axiale commune le long de l'axe de déplacement X. Autrement dit, le rotor 12 coopère simultanément avec l'ensemble des organes de guidage 3a, 3b et 3c lors de toute phase de fonctionnement de l'actionneur 1.

Un plan π, perpendiculaire à l'axe de déplacement X, coupe une strie 21 de chaque organe de guidage 3a, 3b, 3c.

Comme on peut le voir, les organes de guidage 3a, 3b et 3c permettent à la fois de transformer le mouvement de rotation du rotor 12 en translation du rotor 12 et de guider le déplacement dudit rotor 12 le long de l'axe de déplacement X.

Chaque organe de guidage 3a, 3b, 3cprésente une pièce élastiquement déformable 9. Cette pièce déformable 9 donne une liberté de positionnement aux organes de guidage ce qui permet de maintenir la coopération entre les surfaces, en regard, 20 et 25 lors de toute phase de fonctionnement de l'actionneur 1.

L'ensemble des composants de l'actionneur 1 peut être disposé dans le carter 6. Ce carter 6 porte rigidement le stator 13 du moteur électrique 2. Le rotor 12 est donc mobile par rapport au carter 6 et donc par rapport aux organes de guidages 3a, 3b et 3c, mobiles eux aussi par rapport au carter 6.

Dans l'exemple considéré, l'organe d'actionnement 4 forme une butée d'embrayage, cette butée d'embrayage 4 comprend:
- une pièce de support 30,
- un organe de poussée 31 prenant la forme d'une rondelle élastique,
- un palier à billes 32 et
- une pièce d'extrémité 33.

Dans l'exemple considéré, la pièce de support 30, la rondelle élastique 31 et la pièce d'extrémité 33 sont de révolution d'axe de déplacement X. La pièce de support 30 est une pièce de révolution, s'étendant autour de l'axe de déplacement X, qui comporte deux extrémités 40, 41 entourant radialement intérieurement et extérieurement le palier 7, la pièce d'extrémité 33 et la rondelle élastique 31. La rondelle élastique 31, solidaire en rotation de la pièce de support 30, est interposée axialement entre la pièce de support 30 et le palier 32. La pièce de support 30 supporte radialement le palier 32, la pièce d'extrémité 33 et la rondelle élastique 31.

La rondelle élastique 31 permet un déplacement axial de la pièce d'extrémité 33 par rapport à la pièce de support 30. La rondelle élastique 31 réalise aussi une fonction de pré-charge de la butée d'embrayage 4.

Le palier 32 coopère d'une part avec la pièce d'extrémité 33, et d'autre part avec la pièce de support 30 par l'intermédiaire de la rondelle élastique 31. Le palier 32 permet la rotation de la pièce d'extrémité 33 par rapport à la pièce de support 30 et par rapport à la rondelle élastique 31.

La pièce de support 30 est liée, en translation et en rotation au rotor 12. Une surface d'appui 34 de la pièce d'extrémité 33 est configurée pour appuyer contre le composant du véhicule. La surface d'appui 34 est liée en rotation avec le composant du véhicule.

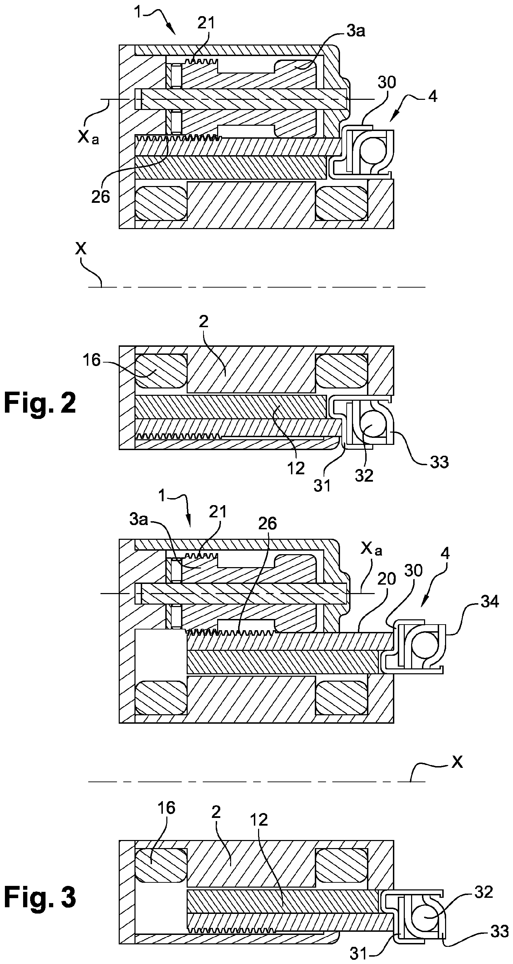

On va maintenant expliquer en référence aux figures 2 et 3 le fonctionnement de l'actionneur 1 représenté à la figure 1. Les figures 2 et 3 présentent des vues en coupe de l'actionneur 1 selon un plan passant par l'axe de déplacement X et par l'axe Xa de l'organe de guidage 3a de la figure 1.

La figure 2 représente l'actionneur 1 en position de repos. Dans cette position, la butée d'embrayage 4 est dans sa position la plus proche du moteur électrique 2. Cette position résulte, par exemple, de la force exercée par le composant du véhicule sur la butée d'embrayage 4.

Lorsque l'actionneur 1 est commandé pour modifier l'état du composant de véhicule, du courant électrique parcourt l'enroulement électrique de stator 16, de sorte qu'un champ magnétique tournant est créé dans l'entrefer du moteur électrique 2. Le rotor 12 est alors déplacé en rotation autour de l'axe de déplacement X et il entraîne ce faisant la surface 20.

Le roulement du filetage 26 sur les stries 21 provoque le déplacement en translation selon l'axe de déplacement X du rotor 12 et par conséquent celui de la butée d'embrayage 4.

Le déplacement du rotor 12 pour un tour autour de l'axe de déplacement X peut être calculé à l'aide du pas p du filetage 26.

Ce déplacement du rotor 12 est transmis à la pièce d'extrémité 33 via le palier 32, la rondelle élastique 31 et la pièce de support 30. La pièce d'extrémité 33 peut alors atteindre la position représentée sur la figure 3 sur laquelle elle est la plus éloignée du moteur électrique 2 et vient appuyer contre un élément du composant de véhicule par sa surface d'appui 34.

Dans l'exemple considéré aux figures 1, 2 et 3, les organes de roulement sont disposés radialement extérieurement par rapport au rotor 12, et le moteur électrique 2 est à rotor externe, mais l'invention n'est pas limitée à un tel exemple.

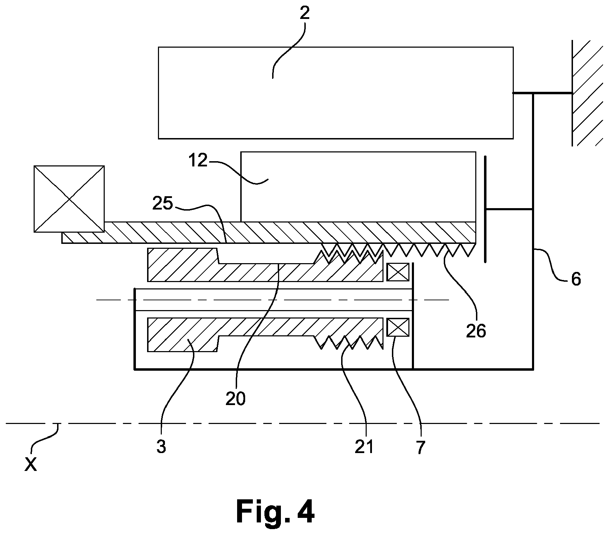

Dans un autre exemple de mise en œuvre de l'invention, représenté schématiquement à la figure 4, les organes de guidages 3 sont disposés radialement intérieurement par rapport au moteur électrique 2, le moteur électrique 2 étant à rotor interne. Autrement dit, dans l'exemple de la figure 4, les positions relatives des surfaces 20 et 25 sont inversées par rapport à celles de l'exemple de mise en œuvre selon les figures 1 à 3.

Dans cet exemple, les organes de guidage 3 sont toujours libres en rotation par rapport au carter 6 par l'intermédiaire du palier 7. Le palier 7 se situe maintenant radialement à l'intérieur du moteur électrique 2 contrairement à l'exemple de mise en œuvre décrit aux figures 1 à 3.

Comme représenté, les surfaces en regard 20 et 25 des organes de guidage 3 et du rotor 12 portent toujours, respectivement, des stries parallèles 21 de pas p et un filetage 26 de pas apparent p.

Dans un autre exemple de mise en œuvre de l'invention, non représenté, l'actionneur comprend N organes de guidage tous décalés axialement de p/N et le filetage du rotor possède un unique filet. Les organes de guidage sont décalés axialement de manière à coopérer successivement avec l'unique filet du filetage lors du déplacement du rotor par rapport au stator le long de l'axe de déplacement du rotor.

Dans cet exemple, il existe donc un plan, perpendiculaire à l'axe de déplacement du rotor, qui coupe une strie d'un des N organes de guidage sans couper une strie d'au moins un autre des N organes de guidage. Autrement dit, les stries forment une partition de l'espace axial parcouru par l'unique filet du filetage lors du déplacement du rotor le long de l'axe de déplacement.

Dans cet exemple de mise en œuvre de l'invention le moteur électrique est à rotor externe, comme représenté aux figures 1 à 3. Dans un autre exemple de mise en œuvre de l'invention, l'actionneur 1 est à rotor interne et présente une configuration des N organes de guidage telle que présentée dans l'exemple directement précédent.

L'invention n'est pas limitée aux exemples qui viennent d'être décrits.

## Revendications

1. Actionneur (1) pour composant de véhicule, comprenant :
- un moteur électrique (2), comprenant un rotor (12) et un stator (13), le rotor (12) étant mobile par rapport au stator (13) en rotation autour d'un axe de déplacement (X) et en translation le long de cet axe,
- un organe d'actionnement (4) du composant de véhicule, déplaçable par le rotor (12),
- au moins un organe de guidage (3, 3a, 3b, 3c) pour le déplacement du rotor (12) par rapport au stator (13), l'organe de guidage (3, 3a, 3b, 3c) présentant une surface (20) en regard d'une surface (25) du rotor (12), lesdites surfaces étant configurée pour coopérer lors de tout ou partie de ce déplacement, **caractérisé en ce que** l'organe de guidage (3, 3a, 3b, 3c) et le rotor (12) ne sont pas coaxiaux.

2. Actionneur (1) selon la revendication 1, l'organe de guidage (3, 3a, 3b, 3c) étant mobile en rotation autour d'un axe parallèle (Xa, Xb, Xc) à l'axe de déplacement (X) du rotor par rapport au stator (13).

3. Actionneur selon la revendication 2, chaque organe de guidage (3, 3a, 3b, 3c) comprenant un palier (7) permettant ledit déplacement en rotation de l'organe de guidage (3, 3a, 3b, 3c).

4. Actionneur (1) selon l'une quelconque des revendications précédentes, les surfaces (20, 25) en regard de l'organe de guidage (3, 3a, 3b, 3c) et du rotor (12) portant respectivement des stries (21) parallèles et un filetage (26), le filetage coopérant avec les stries.

5. Actionneur (1) selon l'une quelconque des revendications précédentes, les surfaces (20, 25) en regard de l'organe de guidage (3, 3a, 3b, 3c) et du rotor (12) définissant une zone de contact l'une avec l'autre de manière à guider radialement tout ou partie du déplacement du rotor (12) par rapport au stator (13).

6. Actionneur (1) selon les revendications 3, 4 et 5, le palier (7), les stries (21) et la zone de contact se succédant axialement lorsque l'on se déplace le long de l'axe de déplacement (X).

7. Actionneur (1) selon la revendication 6, l'organe de guidage présentant une pièce déformable (9), notamment élastiquement déformable.

8. Actionneur (1) selon l'une quelconque des revendications précédentes, le moteur électrique (2) étant à rotor externe, et l'organe de guidage (3, 3a, 3b, 3c) étant disposé radialement extérieurement par rapport au rotor (12).

9. Actionneur (1) selon l'une quelconque des revendications 1 à 7, le moteur électrique (2) étant à rotor interne, et l'organe de guidage (3, 3a, 3b, 3c) étant disposé radialement intérieurement par rapport au rotor (12).

10. Actionneur (1) selon l'une quelconque des revendications précédentes, l'organe d'actionnement formant une butée d'embrayage (4).

11. Actionneur (1) selon l'une quelconque des revendications précédentes, comprenant une pluralité d'organes de guidage (3, 3a, 3b, 3c) pour le déplacement du rotor (12) par rapport au stator (13), les organes de guidage (3, 3a, 3b, 3c) étant disposés autour de l'axe de déplacement (X), et chaque organe de guidage étant mobile en rotation autour d'un axe propre (Xa, Xb, Xc) qui est parallèle à l'axe de déplacement (X) du rotor (12) par rapport au stator (13).

12. Actionneur (1) selon la revendication 11, chaque surface (20) des organes de guidage (3, 3a, 3b, 3c) en regard du rotor (12) portant des mêmes stries (21), ces stries (21) coopérant avec un filetage (26) de la surface du rotor (12) en regard des organes de guidage (3, 3a, 3b, 3c).

13. Actionneur (1) selon la revendication 12, le filetage (26) présentant un nombre de filets multiple du nombre d'organes de guidage (3, 3a, 3b, 3c), notamment égal au nombre d'organes de guidage (3, 3a, 3b, 3c), et les stries (21) occupant une position axiale commune le long de l'axe de déplacement (X) du rotor (12).

14. Actionneur (1) selon la revendication 12, le filetage (26) présentant un unique filet, et les stries (21) occupant des positions axiales le long de l'axe de déplacement (X) du rotor (12) différentes d'un organe de guidage (3, 3a, 3b, 3c) à l'autre.

15. Actionneur (1) selon la revendication 14, comprenant N organes de guidage (3, 3a, 3b, 3c), les stries (21) présentant un pas P et les organes de guidage (3, 3a, 3b, 3c) successifs lorsque l'on se déplace autour de l'axe de déplacement (X) du rotor (12) étant décalés axialement de P/N les uns par rapport aux autres, de manière à ce que le filetage (26) du rotor (12) coopère successivement avec les différentes stries (21) lors de tout ou partie du déplacement du rotor (12) par rapport au stator (13).

16. Ensemble, comprenant :
- un composant de véhicule, par exemple un embrayage, un frein ou une boîte de vitesses, et
- un actionneur (1) selon l'une quelconque des revendications précédentes, l'organe d'actionnement (4) de l'actionneur (1) permettant, lorsqu'il est déplacé par le rotor (12), de modifier l'état du composant.

## Patentansprüche

1. Stellantrieb (1) für eine Fahrzeugkomponente, welcher umfasst:
- einen Elektromotor (2), der einen Rotor (12) und einen Stator (13) umfasst, wobei der Rotor (12) in Bezug auf den Stator (13) drehbeweglich um eine Verlagerungsachse (X) und translatorisch beweglich entlang dieser Achse ist,
- ein Organ zur Betätigung (4) der Fahrzeugkomponente, das durch den Rotor (12) verlagerbar ist
- wenigstens ein Führungsorgan (3, 3a, 3b, 3c) für die Verlagerung des Rotors (12) in Bezug auf den Stator (13), wobei das Führungsorgan (3, 3a, 3b, 3c) eine Fläche (20) aufweist, die einer Fläche (25) des Rotors (12) gegenüberliegt, wobei die Flächen dafür ausgelegt sind, während dieser gesamten Verlagerung oder eines Teils davon zusammenzuwirken, **dadurch gekennzeichnet, dass** das Führungsorgan (3, 3a, 3b, 3c) und der Rotor (12) nicht koaxial sind.

2. Stellantrieb (1) nach Anspruch 1, wobei das Führungsorgan (3, 3a, 3b, 3c) drehbeweglich um eine Achse (Xa, Xb, Xc) ist, die parallel zur Verlagerungsachse (X) des Rotors in Bezug auf den Stator (13) ist.

3. Stellantrieb nach Anspruch 2, wobei jedes Führungsorgan (3, 3a, 3b, 3c) ein Lager (7) umfasst, das die Rotationsverlagerung des Führungsorgans (3, 3a, 3b, 3c) ermöglicht.

4. Stellantrieb (1) nach einem der vorhergehenden Ansprüche, wobei die einander gegenüberliegenden Flächen (20, 25) des Führungsorgans (3, 3a, 3b, 3c) und des Rotors (12) parallele Riefen (21) bzw. ein Gewinde (26) tragen, wobei das Gewinde mit den Riefen zusammenwirkt.

5. Stellantrieb (1) nach einem der vorhergehenden Ansprüche, wobei die einander gegenüberliegenden Flächen (20, 25) des Führungsorgans (3, 3a, 3b, 3c) und des Rotors (12) einen Bereich des Kontakts miteinander definieren, derart, dass sie die Verlagerung des Rotors (12) in Bezug auf den Stator (13) vollständig oder teilweise radial führen.

6. Stellantrieb (1) nach den Ansprüchen 3, 4 und 5, wobei das Lager (7), die Riefen (21) und der Kontaktbereich, wenn man sich entlang der Verlagerungsachse (X) bewegt, axial aufeinanderfolgen.

7. Stellantrieb (1) nach Anspruch 6, wobei das Führungsorgan ein verformbares, insbesondere elastisch verformbares Teil (9) aufweist.

8. Stellantrieb (1) nach einem der vorhergehenden Ansprüche, wobei der Elektromotor (2) ein Motor mit Außenrotor ist und das Führungsorgan (3, 3a, 3b, 3c) radial außen in Bezug auf den Rotor (12) angeordnet ist.

9. Stellantrieb (1) nach einem der Ansprüche 1 bis 7, wobei der Elektromotor (2) ein Motor mit Innenrotor ist und das Führungsorgan (3, 3a, 3b, 3c) radial innen in Bezug auf den Rotor (12) angeordnet ist.

10. Stellantrieb (1) nach einem der vorhergehenden Ansprüche, wobei das Betätigungsorgan ein Ausrücklager (4) bildet.

11. Stellantrieb (1) nach einem der vorhergehenden Ansprüche, welcher mehrere Führungsorgane (3, 3a, 3b, 3c) für die Verlagerung des Rotors (12) in Bezug auf den Stator (13) umfasst, wobei die Führungsorgane (3, 3a, 3b, 3c) um die Verlagerungsachse (X) herum angeordnet sind und jedes Führungsorgan drehbeweglich um eine eigene Achse (Xa, Xb, Xc) ist, welche parallel zur Verlagerungsachse (X) des Rotors (12) in Bezug auf den Stator (13) ist.

12. Stellantrieb (1) nach Anspruch 11, wobei jede Fläche (20) der Führungsorgane (3, 3a, 3b, 3c), die dem Rotor (12) gegenüberliegt, dieselben Riefen (21) trägt, wobei diese Riefen (21) mit einem Gewinde (26) der Fläche des Rotors (12) zusammenwirken, die den Führungsorganen (3, 3a, 3b, 3c) gegenüberliegt.

13. Stellantrieb (1) nach Anspruch 12, wobei das Gewinde (26) eine Anzahl von Gewindegängen aufweist, die ein Vielfaches der Anzahl der Führungsorgane (3, 3a, 3b, 3c), insbesondere gleich der Anzahl der Führungsorgane (3, 3a, 3b, 3c) ist und die Riefen (21) eine gemeinsame axiale Position entlang der Verlagerungsachse (X) des Rotors (12) einnehmen.

14. Stellantrieb (1) nach Anspruch 12, wobei das Gewinde (26) einen einzigen Gewindegang aufweist und die Riefen (21) axiale Positionen entlang der Verlagerungsachse (X) des Rotors (12) einnehmen, die von einem Führungsorgan (3, 3a, 3b, 3c) zum anderen verschieden sind.

15. Stellantrieb (1) nach Anspruch 14, welcher N Führungsorgane (3, 3a, 3b, 3c) umfasst, wobei die Riefen (21) einen Abstand P aufweisen und die aufeinander folgenden Führungsorgane (3, 3a, 3b, 3c), wenn man sich um die Verlagerungsachse (X) des Rotors (12) herum bewegt, axial um P/N zueinander versetzt sind, so dass das Gewinde (26) des Rotors (12) während der gesamten Verlagerung des Rotors (12) in Bezug auf den Stator (13) oder während eines Teils davon nacheinander mit den verschiedenen Riefen (21) zusammenwirkt.

16. Anordnung, welche umfasst:
- eine Fahrzeugkomponente, zum Beispiel eine Kupplung, eine Bremse oder ein Getriebe, und
- einen Stellantrieb (1) nach einem der vorhergehenden Ansprüche, wobei das Betätigungsorgan (4) des Stellantriebs (1) ermöglicht, wenn es durch den Rotor (12) verlagert wird, den Zustand der Komponente zu ändern.

## Claims

1. Actuator (1) for a vehicle component, comprising:
- an electric motor (2), comprising a rotor (12) and a stator (13), the rotor (12) being rotatable with respect to the stator (13) about an axis of movement (X) and being translationally movable along this axis,
- a member (4) for actuating the vehicle component, said member being movable by the rotor (12),
- at least one guide member (3, 3a, 3b, 3c) for the movement of the rotor (12) with respect to the stator (13), the guide member (3, 3a, 3b, 3c) having a surface (20) facing a surface (25) of the rotor (12), said surfaces being configured to cooperate during all or part of this movement, **characterized in that** the guide member (3, 3a, 3b, 3c) and the rotor (12) are not coaxial.

2. Actuator (1) according to Claim 1, the guide member (3, 3a, 3b, 3c) being rotatable about an axis (Xa, Xb, Xc) parallel to the axis of movement (X) of the rotor with respect to the stator (13).

3. Actuator according to Claim 2, each guide member (3, 3a, 3b, 3c) comprising a bearing (7) allowing said rotational movement of the guide member (3, 3a, 3b, 3c).

4. Actuator (1) according to any one of the preceding claims, the facing surfaces (20, 25) of the guide member (3, 3a, 3b, 3c) and of the rotor (12) respectively bearing parallel stripes (21) and a thread (26), the thread cooperating with the stripes.

5. Actuator (1) according to any one of the preceding claims, the facing surfaces (20, 25) of the guide member (3, 3a, 3b, 3c) and of the rotor (12) defining a mutual contact region so as to radially guide all or part of the movement of the rotor (12) with respect to the stator (13).

6. Actuator (1) according to Claims 3, 4 and 5, the bearing (7), the stripes (21) and the contact region axially succeeding one another along the axis of movement (X).

7. Actuator (1) according to Claim 6, the guide member having a deformable, in particular elastically deformable, part (9).

8. Actuator (1) according to any one of the preceding claims, the electric motor (2) being of the external rotor type, and the guide member (3, 3a, 3b, 3c) being arranged radially outside with respect to the rotor (12).

9. Actuator (1) according to any one of Claims 1 to 7, the electric motor (2) being of the internal rotor type, and the guide member (3, 3a, 3b, 3c) being arranged radially inside with respect to the rotor (12).

10. Actuator (1) according to any one of the preceding claims, the actuating member forming a clutch release bearing (4).

11. Actuator (1) according to any one of the preceding claims, comprising a plurality of guide members (3, 3a, 3b, 3c) for the movement of the rotor (12) with respect to the stator (13), the guide members (3, 3a, 3b, 3c) being arranged about the axis of movement (X), and each guide member being rotatable about a dedicated axis (Xa, Xb, Xc) which is parallel to the axis of movement (X) of the rotor (12) with respect to the stator (13).

12. Actuator (1) according to Claim 11, each surface (20) of the guide members (3, 3a, 3b, 3c) facing the rotor (12) bearing the same stripes (21), these stripes (21) cooperating with a thread (26) of the surface of the rotor (12) facing the guide members (3, 3a, 3b, 3c).

13. Actuator (1) according to Claim 12, the thread (26) having a number of strands that is a multiple of the number of guide members (3, 3a, 3b, 3c), in particular equal to the number of guide members (3, 3a, 3b, 3c), and the stripes (21) occupying a common axial position along the axis of movement (X) of the rotor (12).

14. Actuator (1) according to Claim 12, the thread (26) having a single strand, and the stripes (21) occupying axial positions along the axis of movement (X) of the rotor (12) that are different from one guide member (3, 3a, 3b, 3c) to the other.

15. Actuator (1) according to Claim 14, comprising N guide members (3, 3a, 3b, 3c), the stripes (21) having a pitch P, and the guide members (3, 3a, 3b, 3c), which are successive about the axis of movement (X) of the rotor (12), being offset axially by P/N with respect to one another, in such a way that the thread (26) of the rotor (12) cooperates successively with the different stripes (21) during all or part of the movement of the rotor (12) with respect to the stator (13).

16. Assembly, comprising:
- a vehicle component, for example a clutch, a brake or a gearbox, and
- an actuator (1) according to any one of the preceding claims, the member (4) for actuating the actuator (1) making it possible, when it is moved by the rotor (12), to modify the state of the component.
